(19) Europäisches Patentamt
European Patent Office
Office européen des brevets

(11) **EP 2 630 456 B1**

(12) **FASCICULE DE BREVET EUROPEEN**

(45) Date de publication et mention
de la délivrance du brevet:
**23.07.2014 Bulletin 2014/30**

(21) Numéro de dépôt: **11773240.4**

(22) Date de dépôt: **18.10.2011**

(51) Int Cl.:
*G01J 5/06* (2006.01)     *F25B 49/00* (2006.01)
*F25D 19/00* (2006.01)

(86) Numéro de dépôt international:
**PCT/EP2011/068173**

(87) Numéro de publication internationale:
**WO 2012/052426 (26.04.2012 Gazette 2012/17)**

(54) **PROCEDE DE MAINTENANCE PREDICTIVE D'UN MODULE DE DETECTION REFROIDI, ET MODULE ASSOCIE**

VERFAHREN ZUR PRÄDIKTIVEN WARTUNG EINES GEKÜHLTEN SENSORMODULS UND ZUGEHÖRIGES MODUL

PREDICTIVE MAINTENANCE METHOD FOR A COOLED DETECTION MODULE, AND RELATED MODULE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **18.10.2010 FR 1058477**

(43) Date de publication de la demande:
**28.08.2013 Bulletin 2013/35**

(73) Titulaire: **Sagem Défense Sécurité**
**92100 Boulogne-Billancourt (FR)**

(72) Inventeurs:
• **PICARD, Aubry**
**F-75015 Paris (FR)**
• **TILLARD, Thomas**
**F-75015 Paris (FR)**

(74) Mandataire: **Regimbeau**
**20, rue de Chazelles**
**75847 Paris Cedex 17 (FR)**

(56) Documents cités:
**WO-A1-2009/130136     JP-A- 62 030 924**

**Description**

DOMAINE TECHNIQUE GENERAL

La présente invention concerne un procédé de maintenance prédictive d'un module de détection refroidi, comportant un détecteur comportant des pixels sensibles aux signaux lumineux, un cryostat, contenant le détecteur, et une machine à froid.
Elle concerne également un module de mise en oeuvre du procédé.

ETAT DE L'ART

Les systèmes optroniques connus travaillant dans l'infrarouge (IR) comportent fréquemment des modules de détection (MdD) dits refroidis, c'est-à-dire dont le détecteur est porté à une température très faible (-170°C). Les performances ainsi atteintes sont meilleures que celles des MdD non refroidis.
Classiquement, un MdD IR refroidi comporte:

- un détecteur IR, sensible aux signaux lumineux IR;
- un cryostat, qui contient le détecteur IR et qui sert à conditionner mécaniquement le détecteur et à assurer une isolation thermique, afin de limiter la consommation énergétique du MdD refroidi; et
- une machine à froid (MàF), électro-mécanique, servant à abaisser localement la température du cryostat, grâce à des détentes de gaz répétées.

Le fonctionnement d'un MdD comporte deux parties :

- un premier régime de mise en froid (MeF), c'est-à-dire un régime transitoire de refroidissement d'une zone supportant le détecteur pour passer de la température ambiante à sa température opérationnelle ; et
- un second régime de régulation (Rég), c'est-à-dire un régime stabilisé durant lequel la MàF compense l'isolation thermique imparfaite du cryostat encapsulant le détecteur.

Un tel MdD possède des éléments mobiles limitant intrinsèquement la durée d'exploitation du matériel. Les sources d'incident du MdD sont associées au détecteur, au cryostat et à la MàF, mais essentiellement à la MàF et au cryostat. La phase de MeF est en effet une période critique pour la MàF, puisque les constituants de la MàF sont extrêmement sollicités.
Ainsi une maintenance préventive est traditionnellement mise en place sur le MdD.
Par ailleurs, la prévision de défaillance spécifique d'une MàF a déjà fait l'objet de publications, notamment dans FR 2 930 677 et FR 2 930 678.
FR 2 930 677 et FR 2 930 678 divulguent le principe de détection d'une défaillance de la MàF grâce à

- l'observation du Temps de Mise en Froid (TMF) de la MàF, durant la mise en froid, sur une plage de température spécifique, ainsi que
- l'observation de l'évolution du TMF en fonction du nombre de cycles Marche/Arrêt considérés comme valides, et sélectionnés suivant le type de mise en froid.

FR 2 930 677 et FR 2 930 678 enseignent en outre les observations précitées sur des données cumulées dans le temps.
En outre, l'enseignement de FR 2 930 678 s'attache à une prédiction de maintenance en termes de nombre de cycles Marche/Arrêt, tandis que l'enseignement de FR 2 930 677 s'attache à une détection d'une dérive brutale par rapport à l'écart-type des TMF précédents. Les documents JP62030924 et WO2009/130136 divulguent aussi des modules de détection refroidis comportant des caractéristiques de maintenance prédictive.
Les techniques précédentes présentent cependant des inconvénients.
La maintenance préventive d'un MdD assure à l'utilisateur du MdD d'éviter les pannes liées au vieillissement du MdD, mais ne prend pas en compte l'état réel du MdD. Elle ne permet pas non plus une optimisation de la maintenance préventive, car elle ne tient pas compte du régime d'exploitation de la MàF. La durée d'exploitation d'un MdD, généralement exprimée en nombre d'heures de fonctionnement, reste en effet statistique et ne permet pas de prendre en compte les disparités de fabrication et/ou d'utilisation. De ce fait, il n'est pas possible pour l'utilisateur de profiter au maximum de la longévité du MdD dans le cadre d'une utilisation normalisée. De même, en cas de défaillance soudaine des performances du MdD (c'est-à-dire avant le passage en maintenance), l'utilisateur ne peut que constater la défaillance de son MdD.

Par ailleurs, les techniques selon FR 2 930 677 et FR 2 930 678 ne permettent pas la détection d'une panne dans laquelle la MàF se dégrade comme suite à un fonctionnement continu sur un long intervalle de temps. Elles ne permettent pas non plus de discriminer entre la nécessité d'une opération de maintenance préventive (du type regonflage de la MàF - c'est-à-dire une injection de gaz dans la MàF, afin de compenser ses pertes dues aux fuites, ou du type getterisation du cryostat - c'est-à-dire une régénération du piège à gaz (également appelé « getter »), par exemple par circulation de courants forts dans le piège à gaz, afin d'assurer la qualité du vide du cryostat, etc.) et la nécessité d'un remplacement du matériel, par exemple en cas de panne mécanique sévère.

PRESENTATION DE L'INVENTION

L'invention propose de pallier au moins un de ces inconvénients.

A cet effet, l'invention propose selon un premier aspect un procédé de maintenance prédictive d'un module de détection refroidi, comportant:

- un détecteur comportant des pixels sensibles aux signaux lumineux;
- un cryostat, contenant le détecteur; et
- une machine à froid,

le procédé étant caractérisé en ce que qu'il comporte une étape selon laquelle une carte de traitement du module, reliée électriquement au détecteur, au cryostat et à la machine à froid, mesure, stocke et traite au moins

- un courant moteur, c'est-à-dire un courant d'alimentation de la machine ;
- une tension moteur, c'est-à-dire une tension d'alimentation de la machine ; et
- un nombre de pixels défectueux du détecteur.

L'invention selon son premier aspect est avantageusement complétée par les caractéristiques suivantes, prises seules ou en une quelconque de leur combinaison techniquement possible :

- la carte est en outre adaptée pour

  - mesurer, stocker et traiter au moins un temps de changement de régime, c'est-à-dire un temps séparant un instant d'allumage du module d'un instant où la machine transite vers un régime de régulation de la température du détecteur ; et
  - effectuer une étape de comparaison du temps de changement de régime TCR à un seuil $S_{MeF}$, et déclarer le module défaillant lorsque la condition suivante est vérifiée:

$$TCR > S_{MeF}$$

- la carte effectue une étape de comparaison :

  a) d'un courant moteur moyen lmot_moy à un seuil lmot_min, et déclare le module défaillant lorsque la condition suivante est vérifiée :

$$\mathrm{Im}ot\_moy < \mathrm{Im}ot\_\min,$$

  et

  b) d'une tension moteur moyenne Vmot_moy à un seuil Vmot_max, et déclare le module défaillant lorsque la condition suivante est vérifiée :

$$Vmot\_moy > Vmot\_\max,$$

  et

c) d'un nombre Ppix_def de pixels défectueux du détecteur à un nombre maximum toléré Pptx_def_max, et déclare le module défaillant lorsque la condition suivante est vérifiée :

$$Ppix\_def > Ppix\_def\_\max.$$

- la carte est en outre adaptée pour mesurer, stocker et traiter au moins

  un nombre NMM de mises en marche du module, c'est-à-dire une quantification des allumages du module ; et un nombre CCR de changements de régime, c'est-à-dire de transitions du module d'un régime mise en froid à un régime régulation
  un temps Tps d'utilisation du module, c'est-à-dire la durée totale en régime régulation et/ou en régime mise en froid du module, depuis une mise en service.

- la carte calcule une typologie d'utilisation du module par la formule :

$$TU = \frac{x \cdot Tps}{y \cdot CCR + z \cdot NMM}$$

  où x, y et z sont des paramètres mémorisés sur la carte ;
- la carte calcule :

  - le taux d'accroissement, par rapport au temps, du courant moteur et de la tension moteur, et
  - une défaillance future du module en fonction du NMM, CCR et/ou du Tps.

- les mesures sont effectuées régulièrement et en temps réel par la carte.

L'invention concerne également selon un second aspect un module de détection refroidi configuré pour la mise en oeuvre du procédé, comportant :

- un détecteur comportant des pixels sensibles aux signaux lumineux;
- un cryostat, contenant le détecteur ; et
- une machine à froid,
  le module étant caractérisé en ce que qu'il comporte en outre une carte de traitement, reliée électriquement au détecteur, au cryostat et à la machine à froid, la carte étant adaptée pour mesurer, stocker et traiter au moins

  - un courant moteur, c'est-à-dire un courant d'alimentation de la machine ;
  - une tension moteur, c'est-à-dire une tension d'alimentation de la machine; et
  - un nombre de pixels défectueux du détecteur.

Le module peut comporter un afficheur de maintenance prédictive, relié à la carte. Il peut en outre former un module IR, avec un détecteur du type IR.
L'invention présente de nombreux avantages.
Elle permet d'anticiper les pannes du MdD grâce à une mesure en continu, en temps réel, des caractéristiques de consommation électrique (courant et tension) pour le cryostat et pour la MàF, ainsi qu'à une évolution du nombre de pixels défectueux du détecteur.
L'utilisateur n'a plus à craindre l'apparition de pannes intempestives non prévues et liées au vieillissement naturel du MdD, dans le cadre d'une utilisation spécifique.
Il est prévenu par anticipation de la nécessité d'une maintenance ou d'un remplacement de son MdD.
Il peut anticiper les phases de maintenance de son équipement, et ainsi réduire les immobilisations du matériel.
Grâce à l'observation en régime régulé, l'invention permet la détection d'un type de panne indétectable par les techniques antérieures, et qui correspond principalement au cas où le système se dégrade comme suite à un fonctionnement continu sur un long intervalle de temps (par exemple pour les systèmes de surveillance continue).
L'observation croisée des courants et des tensions permet une meilleur diagnostic de la défaillance, puisqu'elle permet de discriminer entre la nécessité d'une opération de maintenance préventive (du type regonflage de la MàF, getterisation du cryostat, etc.) et la nécessité d'un remplacement du matériel, par exemple en cas de panne mécanique sévère.

La typologie d'utilisation permet une optimisation de la maintenance préventive en tenant compte du régime d'exploitation du matériel. Ensuite, la considération de la typologie d'utilisation (une utilisation 24h/24 - 7j/7 est ainsi différente d'une utilisation d'une heure par jour par exemple) est un réel avantage pour l'évaluation de l'état du système, donc pour la définition des conditions optimales de maintenance préventive.

## PRESENTATION DES FIGURES

D'autres caractéristiques, buts et avantages de l'invention ressortiront de la description qui suit, qui est purement illustrative et non limitative, et qui doit être lue en regard des dessins annexés sur lesquels :

- la figure 1 représente un module selon l'invention ;
- les figures 2 représentent l'évolution du courant moteur et de la tension moteur de la MàF, en fonction du temps ;
- la figure 3 représente l'évolution du nombre de pixels défectueux en fonction du nombre de mise en marche ; et
- la figure 4 représente l'évolution de la tension moteur en fonction du temps, lors d'un changement de régime.

Sur l'ensemble des figures, les éléments similaires portent des références numériques identiques.

## DESCRIPTION DETAILLEE

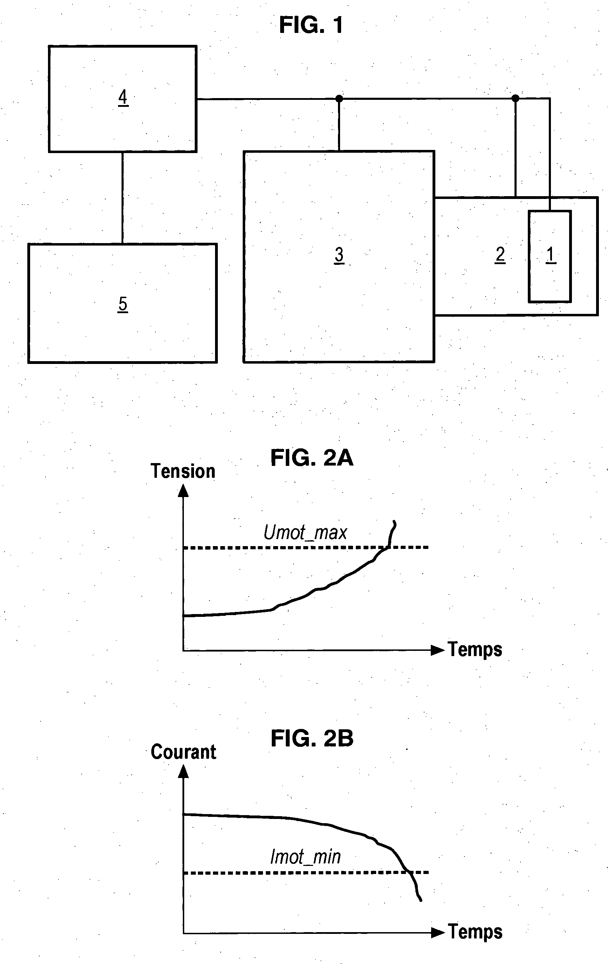

Comme le montre la figure 1, un MdD refroidi selon l'invention comporte principalement:

- un détecteur 1, sensible aux signaux lumineux, composé d'une matrice de pixels photosensibles;
- un cryostat 2, qui contient le détecteur 1 et qui sert à conditionner mécaniquement le détecteur 1 et à assurer une isolation thermique; et
- une machine 3 à froid (MàF), électro-mécanique, servant à abaisser localement la température du cryostat 2, grâce à des détentes de gaz répétées.

Le MdD comporte également une carte 4 de traitement, comportant tous les moyens classiques de mémoire et de calcul pour la mise en oeuvre de l'invention.

La carte 4 permet également de gérer de manière classique la commande de la machine à froid 3 pour la mise en froid et pour la régulation décrites dans la partie introductive de la présente description.

La carte 4 est reliée électriquement au détecteur 1, au cryostat 2 et à la MàF 3.

La carte 4 est adaptée pour mesurer, stocker et traiter au moins

- un courant moteur, c'est-à-dire un courant d'alimentation de la machine 3 ;
- une tension moteur, c'est-à-dire une tension d'alimentation de la machine 3 ; et
- un nombre de pixels défectueux du détecteur 1.

Le nombre de pixels défectueux peut bien entendu être exprimé en pourcentage.

Le courant moteur, la tension moteur et le nombre de pixels défectueux sont mesurés très avantageusement régulièrement (périodicité de l'ordre de la minute) et en temps réel par la carte 4.

Les valeurs correspondant aux mesures sont stockées sur la carte 4. Une gestion, par exemple circulaire, de la mémoire de la carte 4 évite une saturation de la mémoire, dans le cas où la mémoire ne permet de stocker que quelques dizaines de valeurs par exemple.

Grâce à la connaissance des paramètres de tension, courant et du nombre de pixels défectueux, il est possible d'informer l'utilisateur du type de défaut (besoin remplacement ou simple opération de maintenance) et, le cas échéant, l'opération de maintenance à conduire (regonflage, regetterisation).

## DETECTION D'UNE DEFAILLANCE SOUDAINE

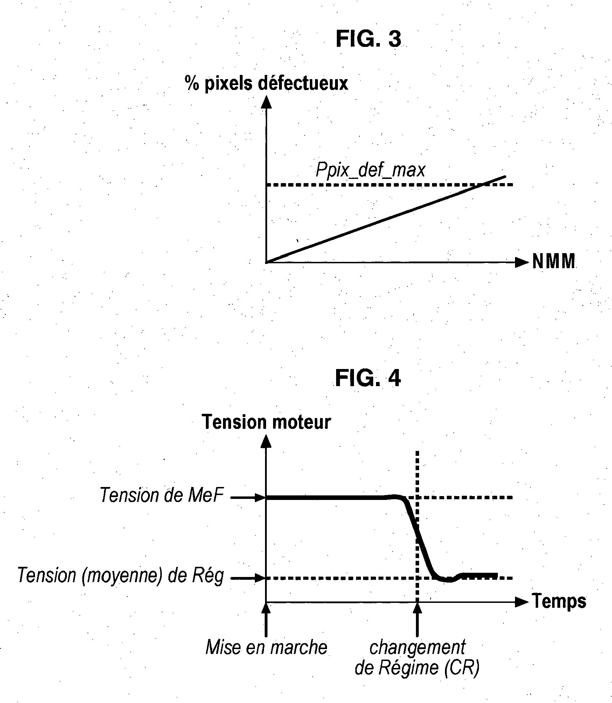

Comme le montre la figure 4, l'observation de l'évolution du courant moteur et de la tension moteur permettent de détecter un changement de régime, c'est-à-dire la transition du régime de mise en froid MeF au régime de régulation Rég.

Grâce à l'observation, avantageusement régulière et en temps réel, du courant moteur et de la tension moteur, la carte 4 peut donc déterminer un Changement de Régime CR, c'est à dire un instant où la MàF transite d'un régime MeF à un régime Rég. Le CR correspond en effet à un point d'inflexion sur les courbes du courant moteur et de la tension moteur en fonction du temps.

La carte 4 peut ainsi également définir un Temps de Changement de Régime TCR, c'est-à-dire un temps séparant l'instant d'allumage de la MàF de l'instant du CR.

Puis la carte 4 effectue une étape de comparaison du temps de changement de régime TCR à un seuil $S_{MeF}$, et déclare le module défaillant lorsque la condition suivante est vérifiée :

$$TCR > S_{MeF}$$

La carte 4 peut donc détecter une défaillance soudaine du module pendant la MeF, car la mise en froid MeF est trop longue dans le temps.

Le module comporte un afficheur 5 de maintenance prédictive, relié à la carte 4. L'afficheur 5 est par exemple un écran du type à cristaux liquides, éventuellement associé à une alarme sonore, et prend la déclaration de défaillance issue de la carte 4 pour avertir l'utilisateur de la défaillance soudaine en régime MeF.

Le seuil $S_{MeF}$ dépend du système optronique dans lequel le module est implémenté, et un TCR significativement plus faible que $S_{MeF}$ est le signe d'un allumage de la MàF très rapproché dans le temps de la dernière MeF: Cette situation ne traduit pas une anomalie du module.

La carte 4 peut également permettre de détecter une défaillance soudaine lors d'un régime Rég.

A cet effet, la carte 4 effectue une étape de comparaison d'un courant moteur moyen lmot_moy à un seuil lmot_min.

lmot_moy est calculée sur des valeurs de courant instantané lors du régime Rég. La fréquence des mesures instantanées par la carte 4, comme le nombre de mesures sur lequel la moyenne est calculée, peut être ajusté afin d'être adapté aux applications souhaitées.

Comme le montre la figure 2A, Imot_min est le seuil en-dessous duquel la carte 4 considère que la valeur moyenne du courant traduit une défaillance du MdD.

La carte 4 déclare le module défaillant lorsque la condition suivante est vérifiée :

$$\mathrm{Im}ot\_moy < \mathrm{Im}ot\_\min$$

Une diminution trop importante de courant est en effet une signature d'une fuite de gaz qui, si elle peut ne pas être trop pénalisante pour tenir la consigne de température en mode régulé, sera bloquante lors du prochain redémarrage (la capacité cryogénique de la MàF est alors trop faible).

De même que précédemment, l'afficheur 5 prend la déclaration de défaillance issue de la carte 4 pour avertir l'utilisateur de la défaillance soudaine.

La carte 4 effectue également une étape de comparaison d'une tension moteur moyenne Vmot_moy à un seuil Vmot max.

Vmot_moy est calculée sur des valeurs de tension lors du régime régulation. La fréquence des mesures instantanées, comme le nombre de mesures sur lequel la moyenne est calculée, peut être ajusté afin d'être adapté aux applications souhaitées.

Comme le montre la figure 2B, Vmot_max est le seuil au-dessus duquel la carte 4 considère que la valeur moyenne de la tension traduit une défaillance du MdD.

La carte 4 déclare le module défaillant lorsque la condition suivante est vérifiée :

$$Vmot\_moy > Vmot\_\max$$

Comme on le verra dans la suite de la présente description, l'observation croisée du comportement en tension moteur et en courant moteur permet de discriminer entre un besoin de maintenance ou un besoin de remplacement de la MàF.

Comme le montre la figure 3, la carte 4 peut également effectuer, en complément ou en alternative, une étape de comparaison d'un nombre Ppix_def de pixels défectueux du détecteur à un nombre maximum toléré Ppix_def_max, et déclare le module défaillant lorsque la condition suivante est vérifiée :

$$Ppix\_def > Ppix\_def\_\max.$$

Il est ainsi possible de déterminer immédiatement quel est le type de défaillance, c'est-à-dire s'il s'agit d'un besoin de remplacement du module ou d'une simple opération de maintenance.

Par exemple, si l'on s'aperçoit que pour une même tension moteur le courant moteur requis est plus faible, il s'agit typiquement d'un cas de fuite d'hélium au niveau de la MàF. En effet, le courant moteur est l'image de la résistance à la rotation du moteur de la machine 3 à froid, et si ce besoin en courant moteur diminue pour une même vitesse requise pour le moteur de la machine 3 à froid (c'est-à-dire une même tension moteur), cela signifie qu'il y a moins de gaz qu'auparavant. Il est alors conseillé de regonfler la MàF.

DETECTION D'UNE DEFAILLANCE LENTE

La carte 4 est en outre adaptée pour, avantageusement régulièrement et en temps réel, mesurer, stocker et traiter au moins
un nombre NMM de mises en marche du module, c'est-à-dire une quantification des allumages du module ;
un nombre CCR de changements de régime, c'est-à-dire de transitions du module d'un régime mise en froid à un régime de régulation ; et

un temps Tps d'utilisation du module, c'est-à-dire la durée totale en régime régulation et/ou en régime mise en froid du module, depuis une mise en service.

La mémoire de la carte 4 est donc dimensionnée pour permettre le stockage de ces données complémentaires.

La carte 4 peut ainsi calculer une typologie d'utilisation TU du module.

La typologie d'utilisation est par exemple fonction de Tps, de CCR et de NMM.

Par exemple, TU est avantageusement déterminé par la formule :

$$TU = \frac{x \cdot Tps}{y \cdot CCR + z \cdot NMM}$$

où x, y et z sont des paramètres mémorisés sur la carte 4.

D'autres formules sont également possibles, comme par exemple :

$$TU = \frac{x \cdot Tps + z \cdot NMM}{y \cdot CCR}$$

Le choix des paramètres x, y et z permet d'ajuster les importances respectives du Tps, du CCR et du NMM sur la durée de vie du MdD.

La carte 4 peut également calculer le taux d'accroissement PENTE, par rapport au temps, du courant moteur moyen Imot_moy et de la tension moteur moyen Vmot_moy, entre les temps t et $\Delta t$ suivant la formule :

$$PENTE_I = \frac{\mathrm{Im}ot\_moy(t + \Delta t) - \mathrm{Im}ot\_moy(t)}{\Delta t}$$

$$PENTE_V = \frac{Vmot\_moy(t + \Delta t) - Vmot\_moy(t)}{\Delta t}$$

La carte 4 peut évaluer de la même manière le taux d'accroissement du nombre ou du pourcentage de pixels défectueux Ppix_def.

L'intervalle $\Delta t$ de temps sur lequel est calculé le taux d'accroissement peut être :

- soit grand (tendance de la grandeur observée sur le long terme)
- soit petit (tendance immédiate de la grandeur).

En option, la carte 4 peut effectuer une comparaison entre une valeur sur le long terme et une valeur immédiate, pour conforter la prédiction ou non d'une défaillance.

Les calculs précités permettent à la carte 4 de calculer une défaillance future du module en fonction du NMM, et/ou CCR et/ou du Tps suivant le choix de l'utilisateur.

En effet la projection du taux d'accroissement PENTE de la grandeur observée (I, V ou le pourcentage de pixels défectueux par exemple) permet de calculer le nombre d'heures maximal au bout duquel une opéràtion sur le MDD est nécessaire, comme le montrent la figure 2A pour le courant, la figure 2B pour la tension, et la figure 3 pour le nombre de pixels défectueux.

La projection donnant le nombre d'heures maximal le plus petit sur les figures 2 et 3 est bien entendu choisi.

La carte 4 permet de définir la durée de vie résiduelle de fonctionnement du module, c'est-à-dire le NMM, le CR et/ou le Tps restant avant un besoin de renvoi en maintenance.

En effet, le nombre d'heures maximal ainsi trouvé permet de trouver le temps $Tps_{RESIDUEL}$ de fonctionnement résiduel spécifique.

Par exemple, à l'instant $Tps_0$ pour connaître le temps résiduel de fonctionnement en mode régulé à l'aide de la projection de la tension moteur, on utilisera la formule suivante :

$$Tps_{RESIDUEL} = \frac{Vmot\_\max - Vmot\_moy(Tps_0)}{PENTE_V} + 2 \times Tps_0$$

Il est alors aisé de convertir cette information, suivant les souhaits de l'utilisateur, par exemple en NMM résiduel spécifique $NMM_{RESIDUEL}$ par la formule :

$$NMM_{RESIDUEL} = \frac{Tps_{RESIDUEL}}{TU}$$

Par suite on définit également le $CCR_{RESIDUEL}$ par:

$$CCR_{RESIDUEL} = \frac{CCR}{NMM} \times NMM_{RESIDUEL} \quad si \quad \frac{CCR}{NMM} \geq k$$

$$CCR_{RESIDUEL} = NMM_{RESIDUEL} \quad sinon$$

Le pourcentage k étant une borne inférieure utilisée pour s'affranchir des cas particuliers de débuts de vie (lorsque les CCR et NMM ont des valeurs faibles).

En option, le TU permet de pondérer le $Tps_{RESIDUEL}$, le $NMM_{RESIDUEL}$ ou le $CCR_{RESIDUEL}$ en les intégrant dans le calcul du nombre d'heures maximal au bout duquel une opération sur le MDD est nécessaire.

Avantageusement, le module décrit ci-dessous est un module IR (infrarouge), avec un détecteur du type IR.

**Revendications**

1. Procédé de maintenance prédictive d'un module de détection refroidi, comportant:

   - un détecteur (1) comportant des pixels sensibles aux signaux lumineux;

- un cryostat (2), contenant le détecteur (1); et
- une machine (3) à froid,

le procédé étant **caractérisé en ce que** qu'il comporte une étape selon laquelle une carte (4) de traitement du module, reliée électriquement au détecteur (1), au cryostat (2) et à la machine (3) à froid, mesure, stocke et traite au moins

- un courant moteur, c'est-à-dire un courant d'alimentation de la machine (3) ;
- une tension moteur, c'est-à-dire une tension d'alimentation de la machine (3) et
- un nombre de pixels défectueux du détecteur (1).

**2.** Procédé selon la revendication 1, dans lequel la carte (4) est en outre adaptée pour

- mesurer, stocker et traiter au moins un temps de changement de régime, c'est-à-dire un temps séparant un instant d'allumage du module d'un instant où la machine (3) transite vers un régime de régulation de la température du détecteur (1) ; et
- effectuer une étape de comparaison du temps de changement de régime TCR à un seuil $S_{MeF}$, et déclarer le module défaillant lorsque la condition suivante est vérifiée :

$$TCR > S_{MeF}$$

**3.** Procédé selon l'une des revendications 1 ou 2, dans lequel la carte (4) effectue une étape de comparaison

a) d'un courant moteur moyen Imot_moy à un seuil Imot_min, et déclare le module défaillant lorsque la condition suivante est vérifiée :

$$\mathrm{Im}ot\_moy < \mathrm{Im}ot\_min ,$$

et

b) d'une tension moteur moyenne Vmot_moy à un seuil Vmot_max, et déclare le module défaillant lorsque la condition suivante est vérifiée :

$$Vmot\_moy > Vmot\_max ,$$

et

c) d'un nombre Ppix_def de pixels défectueux du détecteur à un nombre maximum toléré Ppix_def_max, et déclare le module défaillant lorsque la condition suivante est vérifiée :

$$Ppix\_def > Ppix\_def\_max .$$

**4.** Procédé selon l'une des revendications 1 à 3, dans lequel la carte (4) est en outre adaptée pour mesurer, stocker et traiter au moins

un nombre NMM de mises en marche du module, c'est-à-dire une quantification des allumages du module ; et
un nombre CCR de changements de régime, c'esf-à-dire de transitions du module d'un régime mise en froid à un régime régulation
un temps Tps d'utilisation du module, c'est-à-dire la durée totale en régime régulation et/ou en régime mise en froid du module, depuis une mise en service.

**5.** Procédé selon la revendication 4, dans lequel la carte (4) calcule une typologie d'utilisation du module par la formule :

$$TU = \frac{x \cdot Tps}{y \cdot CCR + z \cdot NMM}$$

où x, y et z sont des paramètres mémorisés sur la carte (4).

6. Procédé selon l'une des revendications 4 ou 5, dans lequel la carte (4) calcule

- le taux d'accroissement, par rapport au temps, du courant moteur et de la tension moteur, et
- une défaillance future du module en fonction du NMM, CCR et/ou du Tps.

7. Procédé selon l'une des revendications 1 à 6, dans lequel les mesures sont effectuées régulièrement et en temps réel par la carte.

8. Module de détection refroidi, comportant:

- un détecteur (1) comportant des pixels sensibles aux signaux lumineux;
- un cryostat (2), contenant le détecteur (1); et
- une machine (3) à froid,
le module étant **caractérisé en ce que** qu'il comporte en outre une carte (4) de traitement, reliée électriquement au détecteur (1), au cryostat (2) et à la machine (3) à froid, la carte (4) étant adaptée pour mesurer, stocker et traiter au moins

- un courant moteur, c'est-à-dire un courant d'alimentation de la machine (3) ;
- une tension moteur, c'est-à-dire une tension d'alimentation de la machine (3) ; et
- un nombre de pixels défectueux du détecteur (1).

9. Module selon la revendication 8, comportant un afficheur (5) de maintenance prédictive, relié à la carte (4).

10. Module selon l'une des revendications 8 ou 9, formant module IR, avec un détecteur du type IR.

**Patentansprüche**

1. Verfahren zur prädiktiven Wartung eines gekühlten Sensormoduls, wobei das Sensormodul aufweist:

- einen Detektor (1), der Pixel aufweist, die für Lichtsignale empfindlich sind;
- einen Kryostat (2), der den Detektor (1) enthält; und
- eine Kältemaschine (3),
wobei das Verfahren **dadurch gekennzeichnet ist, dass** es einen Schritt aufweist, gemäß welchem eine mit dem Detektor (1), dem Kryostat (2) und der Kältemaschine (3) elektrisch verbundene Modulprozessorkarte (4) mindestens

- einen Motorstrom, das heißt einen Versorgungsstrom der Maschine (3);
- eine Motorspannung, das heißt eine Versorgungsspannung der Maschine (3); und
- eine Anzahl von defekten Pixeln des Detektors (1)
misst, speichert und verarbeitet.

2. Verfahren nach Anspruch 1, in welchem die Karte (4) außerdem konfiguriert ist, um

- mindestens eine Zeitdauer der Änderung des Betriebsmodus zu messen, speichern und verarbeiten, das heißt eine Zeitdauer, die einen Zeitpunkt des Zündens des Moduls von einem Zeitpunkt trennt, an dem die Maschine (3) in einen Modus der Regelung der Temperatur des Detektors (1) übergeht; und
- einen Schritt des Vergleichens der Zeitdauer TCR der Änderung des Betriebsmodus mit einem Schwellenwert $S_{MeF}$ durchzuführen und das Modul als defekt zu erklären, wenn die folgende Bedingung erfüllt ist:

$$TCR > S_{McF}.$$

**3.** Verfahren nach einem der Ansprüche 1 oder 2, in welchem die Karte (4) einen Schritt des Vergleichens

a) eines durchschnittlichen Motorstroms Imot_moy mit einem Schwellenwert Imot_min durchführt und das Modul als defekt erklärt, wenn die folgende Bedingung erfüllt ist:

$$Imot\_moy < Imot\_min,$$

und
b) einer durchschnittlichen Motorspannung Vmot_moy mit einem Schwellenwert Vmot_max durchführt und das Modul als defekt erklärt, wenn die folgende Bedingung erfüllt ist:

$$Vmot\_moy > Vmot\_max,$$

und
c) einer Anzahl Ppix_def von defekten Pixeln des Detektors mit einer tolerierten maximalen Anzahl **Ppix_def_max** durchführt und das Modul als defekt erklärt, wenn die folgende Bedingung erfüllt ist:

$$Ppix\_def > Ppix\_def\_max.$$

**4.** Verfahren nach einem der Ansprüche 1 bis 3, in welchem die Karte außerdem konfiguriert ist, um

- eine Anzahl NMM von Startvorgängen des Moduls, das heißt eine quantitative Ermittlung der Zündungen des Moduls; und
- eine Anzahl CCR von Änderungen des Betriebsmodus, das heißt von Übergängen des Moduls von einem Abkühlmodus in einen Regelungsmodus; und
- eine Nutzungszeit Tps des Moduls, das heißt die gesamte Zeitdauer im Regelungsmodus und/oder Abkühlmodus des Moduls seit einer Inbetriebnahme zu messen, speichern und verarbeiten.

**5.** Verfahren nach Anspruch 4, in welchem die Karte (4) eine Typologie der Verwendung des Moduls mit Hilfe der Formel:

$$TU = \frac{x \cdot Tps}{y \cdot CCR + z \cdot NMM}$$

berechnet, wobei x, y und z Parameter sind, die auf der Karte (4) gespeichert sind.

**6.** Verfahren nach einem der Ansprüche 4 oder 5, in welchem die Karte (4)

- die Steigerungsrate des Motorstroms und der Motorspannung bezogen auf die Zeit und
- einen zukünftigen Ausfall des Moduls als Funktion des Werts von NMM, CCR und/oder Tps
berechnet.

**7.** Verfahren nach einem der Ansprüche 1 bis 6, in welchem die Karte die Messungen regelmäßig und in Echtzeit durchführt.

**8.** Gekühltes Detektionsmodul mit:

- einem Detektor (1), der Pixel aufweist, die für Lichtsignale empfindlich sind;
- einem Kryostat (2), der den Detektor (1) enthält; und
- einer Kältemaschine (3),
wobei das Modul **dadurch gekennzeichnet ist, dass** es außerdem eine mit dem Detektor (1), dem Kryostat (2) und der Kältemaschine (3) elektrisch verbundene Prozessorkarte (4) aufweist, die konfiguriert ist, um mindestens
- einen Motorstrom, das heißt einen Versorgungsstrom der Maschine (3);
- eine Motorspannung, das heißt eine Versorgungsspannung der Maschine (3); und
- eine Anzahl von defekten Pixeln des Detektors (1)
zu messen, speichern und verarbeiten.

9. Modul nach Anspruch 8, das eine mit der Karte (4) verbundene Anzeigevorrichtung (5) zur Anzeige der prädiktiven Wartung aufweist.

10. Modul nach einem der Ansprüche 8 oder 9, das ein IR-Modul mit einem Detektor des IR-Typs bildet.

## Claims

1. Predictive maintenance method for a cooled detection module, comprising:

   - a detector (1) comprising pixels that are sensitive to light signals;
   - a cryostat (2), containing the detector (1); and
   - a cooling machine (3),
   the method being **characterised in that** it comprises a step whereby a processing board (4) of the module, which is electrically connected to the detector (1), to the cryostat (2) and to the cooling machine (3), measures, stores and processes at least

     - one motor current, i.e. a machine (3) supply current;
     - one motor voltage, i.e. a machine (3) supply voltage; and
     - a number of defective pixels of the detector (1).

2. Method according to claim 1, wherein the board (4) is further suitable for

   - measuring, storing and processing at least one mode change time, i.e. a time separating a module start time from a time when the machine (3) switches to a detector (1) temperature regulation mode; and
   - performing a step for comparing the mode change time MCT to a threshold $S_{MeF}$, and declaring the module defective when the following condition is true:

$$MCT > S_{MeF}$$

3. Method according to any of claims 1 or 2, wherein the board (4) performs a step for comparing

   a) a mean motor current Imot_mean to a threshold Imot min, and declares the module defective when the following condition is true:

$$\mathrm{Im}ot\_mean < \mathrm{Im}ot\_\min ,$$

   and
   b) a mean motor voltage Vmot_mean to a threshold Vmot_max, and declares the module defective when the following condition is true:

$$Vmot\_mean > Vmot\_\max ,$$

c) a number Ppix_def of defective pixels of the module to a maximum tolerated number Ppix_def max, and declares the module defective when the following condition is true:

$$Ppix\_def > Ppix\_def\_\max .$$

4.  Method according to any of claims 1 to 3, wherein the board (4) is further suitable for measuring, storing and processing at least
    a number NMM of start-ups of the module, i.e. a quantification of module starts; and
    a number CCR of mode changes, i.e. transitions of the module from a cooling mode to a regulation mode
    an operating time Tps of the module, i.e. the total time in regulation mode and/or in cooling mode of the module, from commissioning.

5.  Method according to claim 4, wherein the board (4) calculates a type of use of the module by means of the formula:

$$TU = \frac{x \cdot Tps}{y \cdot CCR + z \cdot NMM}$$

where x, y and z are parameters stored on the board (4).

6.  Method according to any of claims 4 or 5, wherein the board (4) calculates

    - the rate of increase, as a function of time, of the motor current and motor voltage, and
    - a future fault of the module as a function of NMM, CCR and/or Tps.

7.  Method according to any of claims 1 to 6, wherein the measurements are made regularly and in real-time by the board.

8.  Cooled detection module, comprising:

    - a detector (1) comprising pixels that are sensitive to light signals;
    - a cryostat (2), containing the detector (1); and
    - a cooling machine (3),
    the module being **characterised in that** it further comprises a processing board (4), which is electrically connected to the detector (1), to the cryostat (2) and to the cooling machine (3), being adapted to measure, store and process at least

    - one motor current, i.e. a machine (3) supply current;
    - one motor voltage, i.e. a machine (3) supply voltage; and
    - a number of defective pixels of the detector (1).

9.  Module according to claim 8, comprising a predictive maintenance display (5), connected to the board (4).

10. Module according to any of claims 8 or 9, acting as an IR module, with an IR type detector.

## FIG. 1

## FIG. 2A

## FIG. 2B

## FIG. 3

% pixels défectueux

Ppix_def_max

NMM

## FIG. 4

Tension moteur

Tension de MeF ⟶

Tension (moyenne) de Rég ⟶

Temps

Mise en marche        changement
                      de Régime (CR)

**EP 2 630 456 B1**

## RÉFÉRENCES CITÉES DANS LA DESCRIPTION

**Documents brevets cités dans la description**

- FR 2930677
- FR 2930678
- JP 62030924 B
- WO 2009130136 A